# EUROPÄISCHE PATENTSCHRIFT

(11) **EP 2 174 086 B1**
(45) Veröffentlichungstag und Bekanntmachung des Hinweises auf die Patenterteilung: **22.12.2010**
(21) Anmeldenummer: 08761374.1
(22) Anmeldetag: 25.06.2008
(51) Int. Cl.: F27B 7/20

(54) **VORRICHTUNG ZUR DURCHFÜHRUNG CHEMISCHER UND/ODER PHYSIKALISCHER REAKTIONEN ZWISCHEN EINEM FESTSTOFF UND EINEM GAS**
DEVICE FOR PERFORMING CHEMICAL AND/OR PHYSICAL REACTIONS BETWEEN A SOLID MATERIAL AND A GAS
DISPOSITIF POUR RÉALISER DES RÉACTIONS CHIMIQUES ET/OU PHYSIQUES ENTRE UN SOLIDE ET UN GAZ

(30) Priorität: 07.08.2007 DE 102007037281
(43) Veröffentlichungstag der Anmeldung: 14.04.2010
(73) Patentinhaber: Polysius AG, 59269 Beckum (DE)
(72) Erfinder: GEORG, Verena, 59071 Hamm (DE); KUPPER, Detlev, 48291 Telgte (DE); LAGAR GARCIA, Luis, 48149 Münster (DE); HOPPE, Andreas, 59555 Lippstadt (DE); THIEMEYER, Heinz-Werner, 59320 Ennigerloh (DE); KLEGRAF, Daniel, 59602 Rüthen-Westereiden (DE); DECK, Thomas, 59320 Ennigerloh (DE); RICHTER, Stefanie, 32756 Detmold (DE)
(74) Vertreter: Tetzner, Michael
(86) Internationale Anmeldenummer: PCT/EP2008/058104
(87) Internationale Veröffentlichungsnummer: WO 2009/019071

(56) Entgegenhaltungen:
- DE-A1- 1 914 956
- DE-A1- 2 745 425
- US-A- 4 318 692

## Beschreibung

Die Erfindung betrifft eine Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien, mit mehreren, übereinander angeordneten Stufen.

Aus der Praxis sind zur Vorwärmung, Kühlung und/oder Calcinierung von feinkörnigen Materialien insbesondere Systeme bestehend aus Gleichstromwärmetauscher und Zyklonabscheider bekannt. Meist weisen derartige Vorrichtungen mehrere übereinander angeordnete Stufen auf, wobei der Gasstrom von unten nach oben durch alle Stufen geleitet wird, während der Feststoff in entgegengesetzter Richtung den einzelnen Stufen zugeführt wird.

Derartige Systeme haben den Nachteil, dass sie eine enorme Bauhöhe benötigen und der Abscheidegrad im Zyklonabscheider nicht immer befriedigend ist. So kommt es in den Zyklonen oftmals zu unkontrollierten Strömungen, die beispielsweise am Zykloneintritt durch Überlagerung des Eintrittsgasstromes mit dem im Zyklon ausgebildeten Wirbelstrom oder durch Umkehr der Gasströmungsrichtung im Konus des Zyklons bedingt sind. Weiterhin kann es zum Wiedereinstreuen der schon am Zyklonrand abgeschiedenen Partikel in den Gaseintrittstrom des Zyklons kommen.

Eine weitere Problematik besteht darin, dass sich bei unterschiedlich großen Bauformen die Zentrifugalkräfte bei gleichen Eintrittsgeschwindigkeiten verändern und sich dadurch andere Abscheideverhältnisse ergeben.

In der US 4,318,692 wurde daher ein mehrstufiger Vorwärmer für Zementrohmaterial vorgeschlagen, dessen einzelne Stufen jeweils aus einer Steigleitung und einer sich anschließenden wendel- und/oder spiralartigen Leitung bestehen. Die wendel- und/oder spiralartige Leitung weist einen rechteckigen Querschnitt auf und ist an einer Seite eines viereckigen Trichters angeschlossen, in dem der Feststoff und das Gas durch Zentrifugal- und Trägheitskräfte endgültig abgeschieden werden.

Der Erfindung liegt nun die Aufgabe zugrunde, die Vorrichtung zur Durchführung chemischer und/oder physikalischer Reaktionen zwischen einem Feststoff und einem Gas hinsichtlich der Bauhöhe zu verringern.

Erfindungsgemäß wird diese Aufgabe durch die Merkmale des Anspruches 1 gelöst.

Die erfindungsgemäße Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien weist mehrere, übereinander angeordnete Stufen auf, wobei jede Stufe folgende Bauteile umfasst:
a. eine Gas-Feststoff-Suspensionsleitung zum Leiten einer Gas-Feststoff-Suspension, die einen aufsteigenden und einen absteigenden Leitungsabschnitt umfasst und zumindest teilweise als wendel- und/oder spiralartige Leitung ausgebildet ist,
b. Mittel zum Trennen des zugeführten Feststoffs vom zugeführten Gas,
c. eine Feststoffleitung zum Ableiten des abgetrennten Feststoffs
d. sowie eine Gasleitung zum Ableiten des abgetrennten Gases,
wobei die Gasleitung einer Stufe in die Gas-Feststoff-Suspensionsleitung der nächst höheren Stufe übergeht und die Feststoffleitung einer Stufe in der Gas-Feststoff-Suspensionsleitung der nächst niedrigeren Stufe mündet.

Weiterhin sind die wendel- und/oder spiralartigen Leitungen wenigstens zweier aufeinander folgender Stufen abwechseln links- und rechtsdrehend ausgerichtet.

Unter einer wendel- und/oder spiralartigen Leitung im Sinne der Erfindung wird eine Leitung verstanden, die zumindest abschnittsweise wendel- und/oder spiralförmig ausgebildet ist. Die Drehung der wendel- und/oder spiralartigen Leitung kann sich dabei insbesondere auch nur über einen kleineren Winkelbereich, von beispielsweise 90°, erstrecken.

Durch die wechselnde Drehrichtung der wendel- und/oder spiralartigen Leitungen ergibt sich eine äußerst kompakte Konstruktion der Vorrichtung, die eine deutliche Reduzierung der Bauhöhe ermöglicht. So kann beispielsweise gegenüber einem herkömmlichen, 5-stufigen Zyklon-Schwebegaswärmetauscher eine Reduzierung der Bauhöhe von bis zu 25% erreicht werden.

Weitere Ausgestaltungen der Erfindung sind Gegenstand der Unteransprüche.

Gemäß einer bevorzugten Ausgestaltung der Erfindung wird der aufsteigende Leitungsabschnitt der Gas-Feststoff-Suspensionsleitung durch eine Steigleitung und der absteigende Leitungsabschnitt der Gas-Feststoff-Suspensionsleitung durch eine absteigende wendel- und/oder spiralartige Leitung gebildet. Ferner ist ein Umlenkkopf vorgesehen, der die Steigleitung mit der wendel- und/oder spiralartigen Leitung verbindet. Durch den aufsteigenden und absteigenden Leitungsabschnitt wird einerseits eine ausreichende Kontaktzeit zwischen Feststoff und Gas gewährleistet und andererseits kann die Bauhöhe reduziert werden.

Es kann weiterhin vorgesehen werden, dass die Feststoffleitung und die Gasleitung mit dem Ende der wendel- und/oder spiralartigen Leitung in Verbindung steht, wobei beispielsweise am Ende der wendel- und/oder spiralartigen Leitung eine Abscheidekammer vorgesehen ist, an welche die Feststoffleitung zum Ableiten des Feststoffstroms und die Gasleitung zum Ableiten des Gasstroms angeschlossen sind.

Eine weitere Reduzierung der Bauhöhe lässt sich bei wenigstens drei übereinander angeordneten Stufen dann erreichen, wenn die Einmündung der Feststoffleitung in die Gas-Feststoff-Suspensionsleitung der dritten bzw. einer höheren Stufe unterhalb des höchsten Punktes der zwei Stufen niedriger angeordneten Gas-Feststoff-Suspensionsleitung vorgesehen ist.

Weitere Vorteile und Ausgestaltungen der Erfindung werden im Folgenden anhand der Beschreibung und der Zeichnung näher erläutert.

In der Zeichnung zeigen
- Fig. 1: eine Seitenansicht einer Stufe der Vorrichtung,
- Fig. 2: eine um 90° gedrehte Seitenansicht gemäß Fig. 1,
- Fig. 3: eine Draufsicht der Stufe gemäß Fig. 1,
- Fig. 4: eine Seitenansicht der Vorrichtung mit drei übereinander angeordneten Stufen und
- Fig. 5: eine Draufsicht der Vorrichtung gemäß Fig. 4.

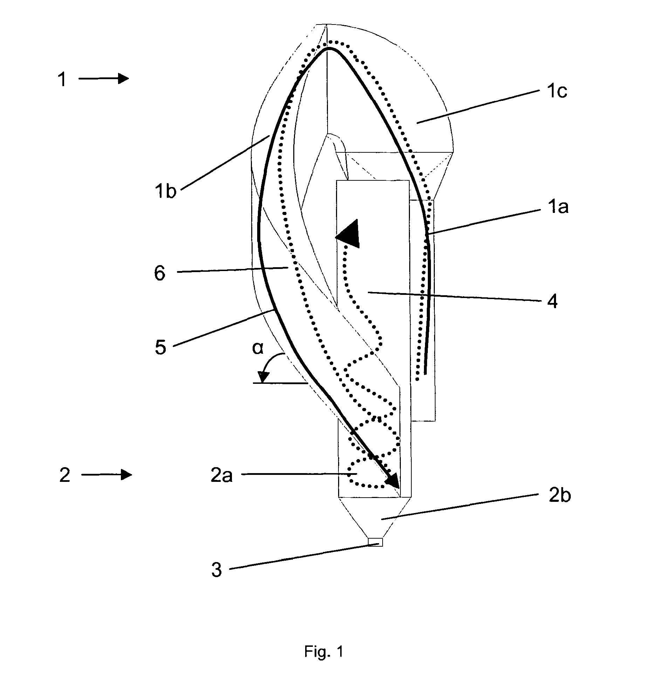

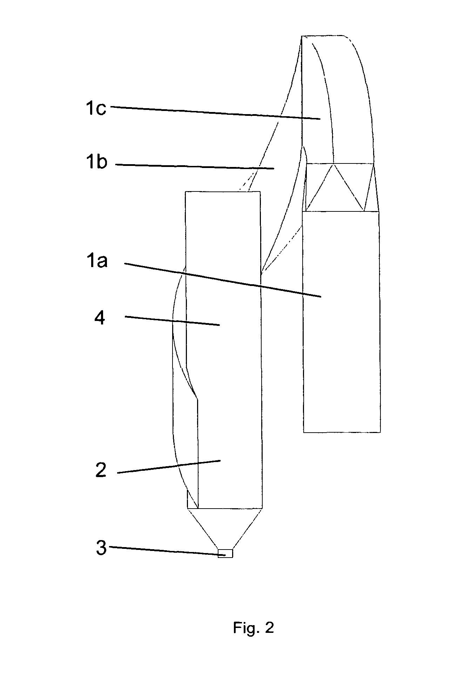

In den Figuren 1 bis 3 ist eine Stufe einer Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien dargestellt.

Sie besteht im Wesentlichen aus einer Gas-Feststoff-Suspensionsleitung 1, Mitteln zum Trennen des zugeführten Feststoffs vom zugeführten Gas, welche im dargestellten Ausführungsbeispiel durch eine Abscheidekammer 2 gebildet werden, einer Feststoffleitung 3 zum Ableiten des abgetrennten Feststoffs sowie einer Gasleitung 4 zum Ableiten des abgetrennten Gases.

Zur Durchführung chemischer und/oder physikalischer Reaktionen zwischen einem Feststoff 5 und einem Gas 6 wird die Gas-Feststoff-Suspension über die Gas-Feststoff-Suspensionsleitung 1 der Abscheidekammer 2 zugeführt.

Die Gas-Feststoff Suspensionsleitung 1 weist einen als Steigleitung 1a ausgebildeten aufsteigenden und einen als wendel- und/oder spiralartige Leitung 1b ausgebildeten absteigenden Leitungsabschnitt auf. Weiterhin ist ein Umlenkkopf 1c vorgesehen, der die Steigleitung 1a mit der wendel- und/oder spiralartigen Leitung 1b verbindet. In vertikaler Richtung betrachtet liegt zumindest der Anfang der wendel- und/oder spiralartigen Leitung 1b höher als ihr Mündungsende an der Abscheidekammer 2. In der wendel- und/oder spiralartigen Leitung 1b kommt es aufgrund der Zentrifugalkräfte zu einer Trennung der Gas-Feststoff-Suspension in einen Feststoffstrom und einen Gasstrom.

Im Rahmen der Erfindung ist es denkbar, dass sich der Radius und/oder die Steigung und/oder die Querschnittsform und/oder die Querschnittsgröße der wendel- und/oder spiralartigen Leitung 1b im Strömungsrichtung der Gas-Feststoff-Suspension ändert. Auf diese Weise kann einerseits Einfluss auf die Vorseparierung der Gas-Feststoff-Suspension im Bereich der wendel- und/oder spiralartigen Leitung genommen werden und andererseits kann die wendel- und/oder spiralartige Leitung 1b an äußere Gegebenheiten angepasst werden. Dies ist insbesondere dann von Vorteil, wenn mehrere Stufen ineinander verschachtelt und übereinander angeordnet werden.

Der Radius, Steigung, Querschnittsform und/oder Querschnittsgröße können sich dabei in Strömungsrichtung sprunghaft und/oder zumindest in einem Abschnitt auch kontinuierlich ändern. So bewirkt beispielsweise eine Radiusverringerung einer Erhöhung der Zentrifugalkraft, während ein Radiuserhöhung einer Verringerung der Zentrifugalkraft entspricht. Durch Veränderung der Querschnittsform und -größe kann Einfluss auf die Strömungsgeschwindigkeit genommen werden.

Die wendel- und/oder spiralartige Leitung 1b mündet im darggestellten Ausfiihrungsbeispiel tangential unter einen Winkel α gegenüber der Horizontalen von mindestens 30° in die Abscheidekammer 2. Im Bereich der Einmündung weist die Abscheidekammer 2 einen zylindrischen Teil 2a auf, an den sich unterhalb ein trichterförmig verjüngender Teil 2b anschließt.

Die Feststoffleitung 3 ist an den sich trichterförmig verjüngenden Teil 2b der Abscheidekammer angeschlossen, während der zylindrische Teil 2a in die Gasleitung 4 übergeht.

Im dargestellten Ausführungsbeispiel weist die Gasleitung 4 und der zylindrische Teil 2a der Abscheidekammer den gleichen Durchmesser auf. Man könnte daher auch davon sprechen, dass die Abscheidekammer durch den unteren Teil der Gasleitung 4 gebildet wird.

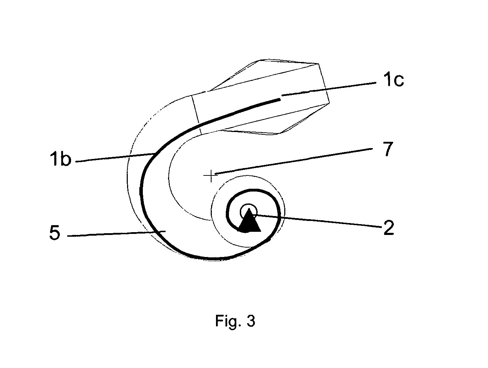

Im Rahmen der Erfindung wäre es auch denkbar, dass die Gasleitung 4 nach Art eines Tauchrohres in die Abscheidekammer 2 hineinragt oder mit einem größeren Durchmesser als die Abscheidekammer ausgebildet ist. Durch die schräg nach unten gerichtete und tangential an die Abscheidekammer angeschlossene wendel- und/oder spiralartige Leitung 1b wird der Feststoff in einem Bogen in den sich trichterförmig verjüngenden Teil 2b der Abscheidekammer 2 geleitet und gelangt dann in die Feststoffleitung 3 (siehe Fig. 1 und 3).

Das Gas 6 wird an der Innenwandung des zylindrischen Teils der Abscheidekammer 2a mit einem Drall nach oben in die Gasleitung 4 abgeführt (siehe Fig. 1). Die schräg nach unten gerichtete Strömung in der Abscheidekammer 2 verhindert auch, dass es im Bereich der Mündung der wendel- und/oder spiralartigen Leitung 1b zu einer Überlagerung des Eintrittsgasstromes mit der in der Abscheidekammer ausgebildeten Drallströmung kommt.

Wie aus Fig. 3 zu ersehen ist, erstreckt sich die wendel- und/oder spiralartige Leitung 1b über einen Winkelbereich von etwa 180°. Im Rahmen der Erfindung kann der Winkelbereich aber auch deutlich größer oder kleiner gewählt werden. Weiterhin ist es denkbar, dass sich der Radius und/oder die Steigung und/oder die Querschnittsform und/oder die Querschnittsgröße der wendel- bzw. spiralartigen Leitung 1b in Strömungsrichtung der Gas-Feststoff-Suspension ändert.

Die erfindungsgemäße Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien umfasst mehrere, übereinander angeordnete Stufen, wie sie oben anhand der Figuren 1 bis 3 beschrieben worden sind. Dabei geht die Gasleitung einer Stufe in die Gas-Feststoff-Suspensionsleitung der nächst höheren Stufe über und die Feststoffleitung einer Stufe mündet in die Gas-Feststoff-Suspensionsleitung der nächst niedrigeren Stufe.

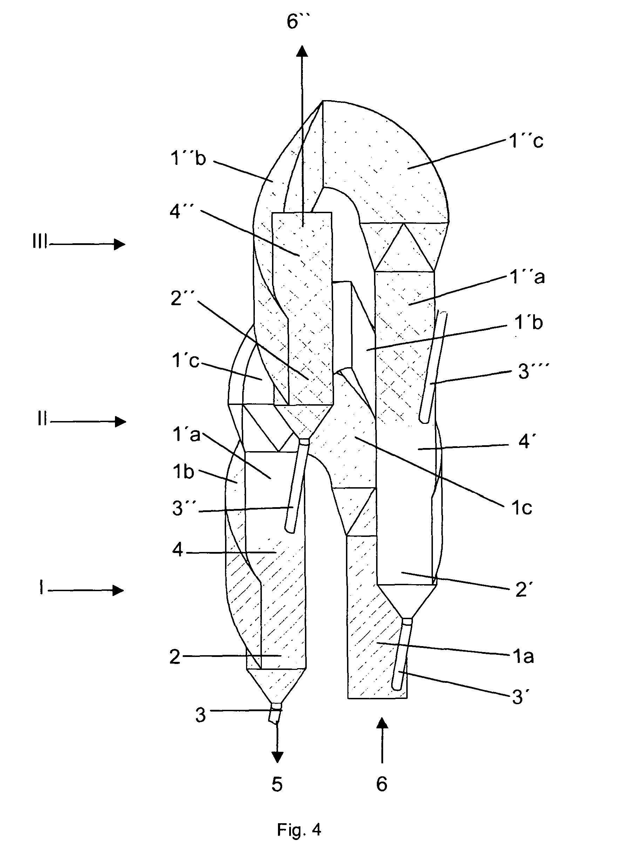

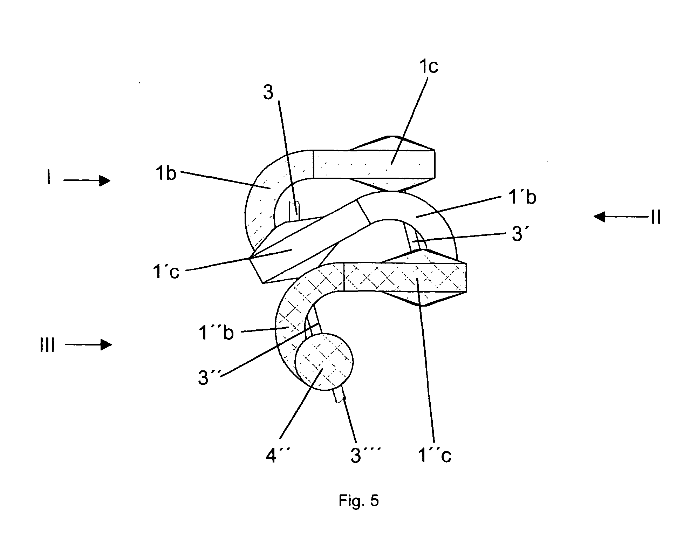

Im Folgenden wird anhand der Figuren 4 und 5 eine Vorrichtung mit drei Stufen I, II, III beschrieben, bei der es sich beispielsweise um einen dreistufigen Vorwärmer für Zementrohmaterial handelt.

Bei einer solchen mehrstufigen Anordnung wird ein zu behandelnder Feststoff in der obersten Stufe III über eine Feststoffleitung 3'" zugeführt und als behandelter Feststoff 5, beispielsweise vorgewärmter Feststoff, aus der untersten Stufe I abgeführt. Während der Feststoff somit von oben nach unten durch die drei Stufen geführt wird, durchströmt das Gas die Anordnung in umgekehrter Richtung. Bei dem der untersten Stufe zuzuführenden Gas 6 handelt es sich beispielsweise um das heiße Abgas eines Ofens oder eines Calcinators. Das in der dritten Stufe über die Gasleitung 4" abgeführte Gas 6" wird beispielsweise zur Entstaubung einem Filter oder einem nachgeschalteten hocheffizienten Abscheider zugeführt. Der behandelte Feststoff 5 gelangt beispielsweise in einen Calcinator oder einen Ofen zur weiteren Verarbeitung.

Durch die Ausbildung der Gas-Feststoff-Suspensionsleitung 1 mit einer Steigleitung 1a und einer absteigenden, wendel- und/oder spiralartigen Leitung 1b können die drei Stufen sehr kompakt und ineinander verschlungen angeordnet werden. Es ist weiterhin vorgesehen, dass die wendel- und/oder spiralartigen Leitungen 1b, 1'b, 1"b wenigstens zweier aufeinander folgender Stufen abwechselnd links- und rechtsdrehend ausgerichtet sind (siehe Fig. 5). In der Draufsicht können die Gas-Feststoff-Suspensionsleitungen, insbesondere die wendel- und/oder spiralartigen Leitungen zweier in Gasströmungsrichtung aufeinander folgenden Stufen mäanderförmig angeordnet werden.

Eine besonders niedrige Bauform lässt sich dann erreichen, wenn bei wenigstens drei übereinander angeordneten Stufen die Einmündung der Feststoffleitung in die Gas-Feststoff-Suspensionsleitung der dritten bzw. einer höheren Stufe unterhalb des höchstens Punktes der zwei Stufen niedriger angeordneten Gas-Feststoff-Suspensionsleitung vorgesehen ist. Im dargestellten Ausführungsbeispiel ist gut zu erkennen, dass die Feststoffleitung 3"', welche an die Steigleitung 1"a der dritten Stufe III angeschlossen ist, unterhalb des höchsten Punktes der Gas-Feststoff-Suspensionsleitung der untersten Stufe I vorgesehen ist.

## Patentansprüche

1. Vorrichtung zur Durchführung chemischer und/oder physikalischer Reaktionen zwischen einem Feststoff (5) und einem Gas (6) zur Vorwärmung, Kühlung und/oder Calcinierung von feinkörnigen Materialien, mit mehreren, übereinander angeordnete Stufen (I, II, III), wobei jede Stufe folgende Bauteile umfasst:
a. eine Gas-Feststoff-Suspensionsleitung (1) zum Leiten einer Gas-Feststoff-Suspension, die einen aufsteigenden und einen absteigenden Leitungsabschnitt umfasst und zumindest teilweise als wendel- und/oder spiralartige Leitung (1b) ausgebildet ist,
b. Mittel zum Trennen des zugeführten Feststoffs (5) vom zugeführten Gas (6),
c. eine Feststoffleitung (3) zum Ableiten des abgetrennten Feststoffs
d. sowie eine Gasleitung (4) zum Ableiten des abgetrennten Gases,
wobei die Gasleitung einer Stufe in die Gas-Feststoff-Suspensionsleitung der nächst höheren Stufe übergeht und die Feststoffleitung einer Stufe in der Gas-Feststoff-Suspensionsleitung der nächst niedrigeren Stufe mündet,
**dadurch gekennzeichnet, dass** die wendel- und/oder spiralartigen Leitungen (1b, 1'b, 1"b) wenigstens zweier aufeinander folgender Stufen (I, II, III) abwechselnd links- und rechtsdrehend ausgerichtet sind.

2. Vorrichtung nach Anspruch 1, **dadurch gekennzeichnet, dass** die Gas-Feststoff-Suspensionsleitung (1) einer Stufe durch eine Steigleitung (1a)und eine absteigende wendel- und/oder spiralartige Leitung (1b) gebildet wird und ferner ein Umlenkkopf (1c) vorgesehen ist, der die Steigleitung mit der wendel- und/oder spiralartigen Leitung verbindet.

3. Vorrichtung nach Anspruch 1, **dadurch gekennzeichnet, dass** die Feststoffleitung (3) und die Gasleitung (4) mit dem Ende der wendel- und/oder spiralartigen Leitung (1b) in Verbindung steht.

4. Vorrichtung nach Anspruch 1, **dadurch gekennzeichnet, dass** eine mit dem Ende der wendel- und/oder spiralartigen Leitung (1b) in Verbindung stehende Abscheidekammer (2) vorgesehen ist, an welche die Feststoffleitung zum Ableiten des Feststoffstroms und die Gasleitung zum Ableiten des Gasstroms angeschlossen sind.

5. Vorrichtung nach Anspruch 1, **dadurch gekennzeichnet, dass** wenigstens drei übereinander angeordnete Stufen (I, II, III) vorgesehen sind, wobei die Einmündung der Feststoffleitung in die Gas-Feststoff-Suspensionsleitung der dritten bzw. einer höheren Stufe (II) unterhalb des höchsten Punktes der zwei Stufen niedriger angeordneten Gas-Feststoff-Suspensionsleitung (1) vorgesehen ist.

## Claims

1. Device for carrying out chemical and/or physical reactions between a solid material (5) and a gas (6) for preheating, cooling and/or calcining fine-grained materials, having a plurality of steps (I, II, III) which are arranged one above the other, each step comprising the following components:
a. a gas/solid material suspension line (1) which is for directing a gas/solid material suspension and which comprises an ascending and a descending line portion and which is constructed at least partially in the form of a helical and/or spiral line (1b),
b. means for separating the solid material (5) supplied from the gas (6) supplied,
c. a solid material line (3) for directing away the separated solid material,
d. and a gas line (4) for directing away the separated gas, the gas line of a step merging into the gas/solid material suspension line of the next step up and the solid material line of a step opening in the gas/solid material suspension line of the next step down,
**characterised in that** the helical and/or spiral lines (1b, 1'b, 1"b) of at least two successive steps (I, II, III) are directed so as to be orientated alternately in an anticlockwise and clockwise direction.

2. Device according to claim 1, **characterised in that** the gas/solid material suspension line (1) of a step is formed by an ascending line (1a) and a descending helical and/or spiral line (1b) and there is further provided a redirecting head (1c) which connects the ascending line to the helical and/or spiral line.

3. Device according to claim 1, **characterised in that** the solid material line (3) and the gas line (4) is connected to the end of the helical and/or spiral line (1b).

4. Device according to claim 1, **characterised in that** there is provided a separation chamber (2) which is connected to the end of the helical and/or spiral line (1b) and to which the solid material line for directing away the solid material flow and the gas line for directing away the gas flow are connected.

5. Device according to claim 1, **characterised in that** there are provided at least three steps (I, II, III) which are arranged one above the other, the opening of the solid material line into the gas/solid material suspension line of the third or a higher step (II) being provided below the highest point of the gas/solid material suspension line (1) which is arranged two steps lower.

## Revendications

1. Dispositif pour la réalisation de réactions chimiques et / ou physiques entre un solide (5) et un gaz (6) pour le préchauffage, le refroidissement et / ou la calcination de matériaux à grains fins, avec plusieurs étages (I, II, III), disposes les uns aux dessus des autres, chaque étage comprenant les composants suivantes :
a. une conduite de suspension gaz-solide (1) pour une suspension gaz-solide, qui comprend une section de conduite montante et une section de conduite descendante, et qui est au moins partiellement conçue en tant que conduite hélicoïdale et / ou conduite genre spirale (1b),
b. des moyens pour séparer le solide amené (5) du gaz amené (6),
c. une conduite de solide (3) pour dériver le solide séparé,
d. ainsi qu'une conduite de gaz (4) pour dériver le gaz séparé,
la conduite de gaz d'un étage passant à la conduite de suspension solide-gaz de l'étage supérieur suivant, et la conduite de solide d'un étage débouchant dans la conduite de suspension gaz-solide de l'étage inférieur suivant, **caractérisé en ce que** les conduites hélicoïdales et / ou genre spirale (1b, 1'b, 1"b) d'au moins deux étages (I, II, III), qui se succèdent, sont agencées en évoluant alternativement vers la droite et vers la gauche.

2. Dispositif selon la revendication 1, **caractérisé en ce que** la conduite de suspension gaz-solide (1) d'un étage est formée par une conduite montante (1a) et une conduite descendante hélicoïdale et / ou genre spirale (1b) et que, de plus, est prévue une tête de renvoi (1c), qui relie la conduite montante à la conduite hélicoïdale et / ou genre spirale.

3. Dispositif selon la revendication 1, **caractérisé en ce que** la conduite de solide (3) et la conduite de gaz (4) sont reliées à l'extrémité de la conduite hélicoïdale et / ou genre spirale (1b).

4. Dispositif selon la revendication 1, **caractérisé en ce qu'**est prévue une chambre de séparation (2) qui est en communication avec l'extrémité de la conduite hélicoïdale et / ou genre spirale (1b) et à laquelle sont raccordées la conduite de solide, pour la dérivation du flux de solide, et la conduite de gaz, pour la dérivation du flux de gaz.

5. Dispositif selon la revendication 1, **caractérisé en ce que** trois étages (I, II, III) disposés l'un au-dessus de l'autre sont au moins prévus, le débouché de la conduite de solide dans la conduite de suspension gaz-solide du troisième ou d'un étage supérieur (II), étant prévu au-dessous du point le plus élevé des deux étages de la conduite de suspension gaz-solide (1) disposée plus bas.
